# EUROPEAN PATENT APPLICATION

(11) **EP 4 831 907 A1**
(43) Date of publication of application: **28.10.2026**
(21) Application number: 24906856.0
(22) Date of filing: 01.10.2024
(51) Int. Cl.: G06T 1/20, G06N 3/04, G06N 3/08, G06T 7/00, G08G 1/16, H04N 7/18, H04N 23/60

(54) **PROCESSOR ON INTEGRATED CIRCUIT, CONTROL DEVICE, TARGET RECOGNITION DEVICE, AND VEHICLE TRAVEL CONTROL SYSTEM**

(30) Priority: 21.12.2023 JP 2023215857
(71) Applicant: DENSO CORPORATION, Kariya-city, Aichi-pref. 448-8661 (JP)
(72) Inventor: UMEDA, Chikahiro, Kariya- city, Aichi-pref., 448-8661 (JP); ISHIWATARI, Kazuyoshi, Kariya- city, Aichi-pref., 448-8661 (JP)
(74) Representative: Winter, Brandl - Partnerschaft mbB
(86) International application number: PCT/JP2024/035047
(87) International publication number: WO 2025/134467

(57) **Abstract**

A control device (50) includes a multi-core processor (200) including a plurality of cores (400) each having a plurality of processor elements (401), and a CPU (100) that controls the entire control device and is provided alongside the multi-core processor. The plurality of cores are interconnected with each other, and each of the plurality of processor elements includes an ALU (403) and a MAC calculator (404).

## Description

### CROSS REFERENCE TO RELATED APPLICATION

This application is based on Japanese Patent Application No. 2023-215857 filed on December 21, 2023, the disclosure of which is incorporated herein by reference.

### TECHNICAL FIELD

The present disclosure relates to a processor on an integrated circuit, a control device, a target object recognition device, and a vehicle travel control system.

### BACKGROUND ART

In recent years, in order to accurately recognize an environment outside a vehicle, there are needs for an improvement in performance of an in-vehicle camera, an expansion of an imaging area, higher accuracy of target object recognition, and the like.

In order to meet the above needs, image data to be calculated has become higher in resolution, and along with this, a neural network model that processes the data has become larger.

Patent Literature 1 describes a control device that recognizes a target object in an image indicating the outside of the vehicle captured by the in-vehicle camera using a neural network in order to implement automated driving and more advanced driving assistance.

### RELATED ART LITERATURE

### PATENT LITERATURE

Patent Literature 1: US 2013/0063600 A1

### SUMMARY OF INVENTION

However, in target object recognition using an image captured by the in-vehicle camera, the control device described in Patent Literature 1 executes a pre-process and a post-process of image data by a 64-bit to 128-bit calculation accelerator such as a DSP (Digital Signal Processor) and a CPU (Central Processing Unit), and executes a DNN process using a DNN (Deep Neural Network) by an NPU (Neural Processing Unit) equipped with a large number of MAC (Multiply-Accumulate) calculators. Thus, in the control device described in Patent Literature 1, since the target object recognition process is shared among the DSP, the CPU, and the NPU, the data process cannot be executed efficiently.

In view of the above difficulties, it is an object of the present disclosure to provide a processor on an integrated circuit, a control device, a target object recognition device, and a vehicle travel control system capable of efficiently executing data processing.

The present disclosure employs the following technical means in order to solve the above difficulties. Reference numerals in parentheses described in claims and this section are an example indicating a correspondence relationship with specific means described in embodiments described later as one aspect, and do not limit a technical scope of the present disclosure.

According to an aspect of the present disclosure, a processor is on an integrated circuit used for a vehicle that executes automated driving assistance based on a vehicle exterior image obtained by capturing by a camera that captures an external environment of a subject vehicle, and includes: a multi-core processor including multiple cores each having multiple processor elements; and a CPU configured to control the multi-core processor. In the multi-core processor, the multiple cores are interconnected. Each of the multiple processor elements is configured to include an ALU that executes logical operations, addition, and subtraction, and a MAC calculator that executes product-sum operations. Furthermore, to allow referencing of computation data from other processor elements during calculation, it is interconnected with at least one of those other processor elements. The CPU controls a task schedule of the multi-core processor, and causes the multi-core processor to continuously calculate a series of tasks including a process of: executing a pre-process on the vehicle exterior image, the pre-process including at least one of a water droplet-dirt removal process of removing water drops or dirt reflected in the vehicle exterior image, a distortion correction process of correcting distortion of the vehicle exterior image, a resizing process of changing a size of the vehicle exterior image, a cropping process of cropping a predetermined region from the vehicle exterior image, or a luminance standardization process of standardizing luminance of the vehicle exterior image; executing a DNN process on the image after the pre-process, the DNN process including at least one of a classification process of classifying external environment information included in the image after the pre-process into a predetermined target object classification, a detection process of identifying a position, a count, and a type of a target object outside the subject vehicle from the external environment information included in the image after the pre-process, a segmentation process of dividing the external environment information included in the image after the pre-process by the target object outside the subject vehicle, or a pose estimation process of estimating a pose of the target object included in the external environment information in the image after the pre-process; and executing a post-process on the image after the DNN process, the post-process including at least one of a NMS process of removing a part of an overlapping candidate region among a candidate region of the target object included in the image after the DNN process, or a Top-K process of extracting K candidate regions having highest confidence scores.

According to an aspect of the present disclosure, the control device is a control device for a vehicle that executes automated driving assistance, and includes a multi-core processor having multiple cores each including multiple processor elements, and a CPU that controls the multi-core processor. The multiple cores are interconnected. Each of the multiple processor elements includes an ALU and a MAC calculator. The multi-core processor executes, on image data indicating an outside of a vehicle and input to the control device, at least one of a classification process, a detection process, a segmentation process, or a pose estimation process as a DNN process using a DNN (Deep Neural Network), at least one of a water droplet-dirt removal process, a distortion correction process, a resizing process, a cropping process, or a luminance standardization process as a pre-process for the DNN process, and at least one of a NMS process or a Top-K process as a post-process for the DNN process.

According to this configuration, the control device can execute both calculations of a neural network and the pre-process and the post-process thereof only by the control device without a need for data transfer among DSPs or data transfer to the CPU. Thereby, data processing can be efficiently executed and processing time can be accelerated. Specifically, since data transfer between a DNN main body and a part of layers or the pre-process and the post-process can be omitted, entire data process can be accelerated. Furthermore, since the control device of a present embodiment is programmable, addition of a custom layer is also possible, and addition of functions by SW (software) becomes possible. Thereby improving function expandability by SW such as route search and signal process. In addition, a decrease in development efficiency caused by development spanning the CPU, the DSP, and the like can be avoided, and the development efficiency is improved.

A target object recognition device according to an aspect of the present disclosure is a target object recognition device mounted on a vehicle and including an imaging unit configured to acquire image data indicating the outside of the vehicle, and the control device described above.

A vehicle travel control system according to one aspect of the present disclosure includes the above-described target object recognition device and a traveling device. The control device performs vehicle driving control by controlling the traveling device based on a result of a target object recognition process by the target object recognition device.

### BRIEF DESCRIPTION OF DRAWINGS

The above objects and other objects, features, and advantages of the present disclosure will become more apparent from the following detailed description with reference to the accompanying drawings. In the drawings:
FIG. 1 is a block diagram showing a configuration example of the target object recognition device according to the present embodiment;
FIG. 2 is a diagram showing an example of a hardware configuration of the control device included in the target object recognition device according to the present embodiment;
FIG. 3 is a diagram showing a functional arrangement example of the control device according to the present embodiment in comparison with a functional arrangement example of a conventional control device;
FIG. 4 is a flowchart showing the target object recognition process executed by a multi-core processor according to the present embodiment;
FIG. 5 is a block diagram showing configurations of the target object recognition device and a water droplet removal system according to the present embodiment;
FIG. 6 is a diagram showing an outline of an image process according to the present embodiment;
FIG. 7 is a flowchart showing a process procedure executed by the multi-core processor of the target object recognition device according to the present embodiment;
FIG. 8 is a block diagram showing the configuration of the target object recognition device according to the present embodiment;
FIG. 9 is a schematic diagram for illustrating IoU;
FIG. 10 is a diagram showing an example of a threshold value table;
FIG. 11 is a flowchart showing an example of object detection process executed by the target object recognition device according to the present embodiment;
FIG. 12 is a schematic diagram showing an example of a result of inference process by an inference unit;
FIG. 13 is a schematic diagram showing an example of a result of the NMS process by an NMS unit;
FIG. 14 is a block diagram showing a configuration example of the vehicle travel control system according to the present embodiment; and
FIG. 15 is a diagram for illustrating a pyramid-like connection aspect.

### DESCRIPTION OF EMBODIMENTS

Hereinafter, an embodiment of the present disclosure will be described with reference to the drawings. The embodiment described below is merely examples of implementing the present disclosure, and the present disclosure is not limited to specific configurations described below. In carrying out the present disclosure, a specific configuration according to the embodiment may be adopted as appropriate.

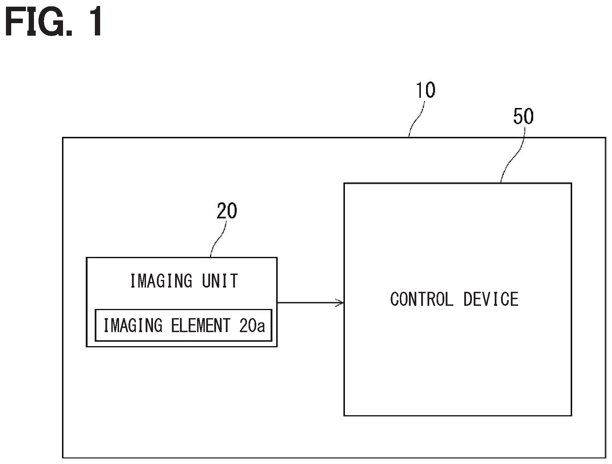

FIG. 1 is a block diagram showing a configuration example of a target object recognition device 10 according to the present embodiment. The target object recognition device 10 according to the present embodiment is a target object recognition device for automated driving assistance, is mounted on a vehicle, and executes a target object recognition process for recognizing a target object in an external environment of the vehicle. The target object recognition device 10 according to the present embodiment includes at least an imaging unit 20 and a control device 50.

The imaging unit 20 is, for example, a camera, and captures an image of an external environment around the vehicle to acquire a scenery outside the vehicle as an image (that is, vehicle exterior image). The image data captured by the imaging unit 20 is transmitted to the control device 50. An installation position and a number of the imaging units 20 are not particularly limited. For example, the imaging unit 20 is installed on a front surface, side surfaces, and a rear surface of the vehicle. The imaging unit 20 includes an imaging element 20a having full HD to 8K pixels.

The control device 50 is a processor for a vehicle that executes automated driving assistance based on the vehicle exterior image captured by the imaging unit 20. The control device 50 is a microcomputer including a CPU 100, a multi-core processor 200, and a storage device 300, which will be described in detail later. The control device 50 is also referred to as an ECU (Electronic Control Unit).

The target object recognition device 10 according to the present embodiment may include a LIDAR (Laser Imaging Detection and Ranging), a vehicle state sensor, and the like. The LIDAR measures a position (distance and direction) of a reflection point using laser pulses. More specifically, the LIDAR sequentially outputs (scans) laser pulses in plurality of directions. When the laser pulse is reflected at the reflection point, reflected light of the laser pulse returns to the LIDAR. The LIDAR receives the reflected light of the laser pulse. The distance and the direction of the reflection point can be calculated from a light receiving state of the reflected light. A measurement result by the LIDAR is transmitted to the control device 50. The vehicle state sensor detects a state of the vehicle. For example, the vehicle state sensor includes a wheel speed sensor, a vehicle speed sensor, and the like. The wheel speed sensor detects a rotational speed of each wheel of the vehicle. The vehicle speed sensor detects a speed of the vehicle. Vehicle state information detected by the vehicle state sensor is transmitted to the control device.

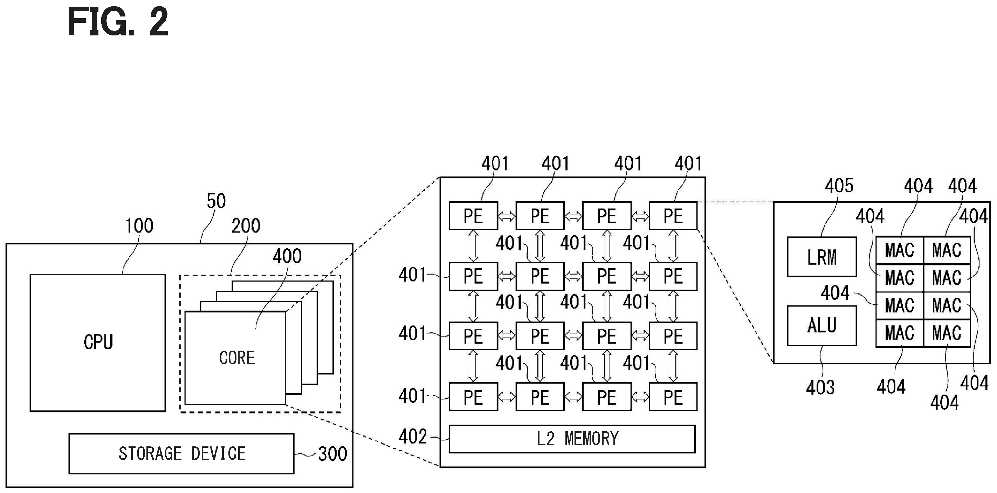

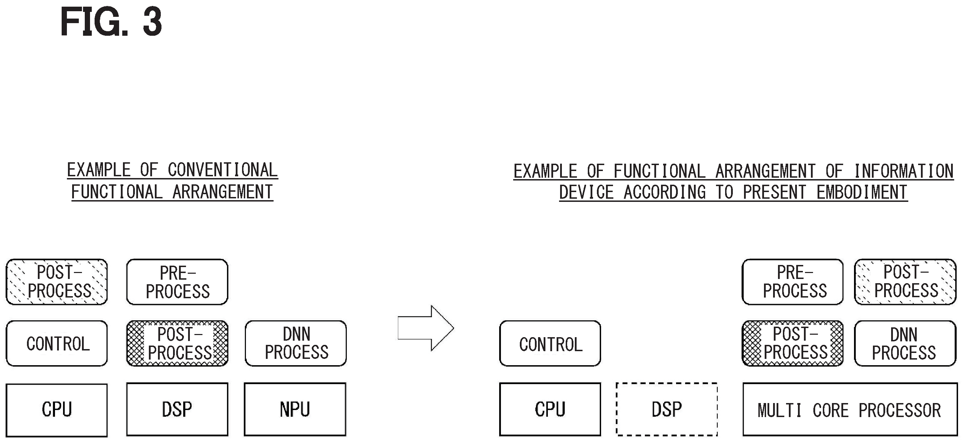

FIG. 2 is a diagram showing an example of a hardware configuration of the control device 50 included in the target object recognition device 10 according to the present embodiment. FIG. 3 is a diagram showing a functional arrangement example of the control device 50 according to the present embodiment in comparison with a functional arrangement example of a conventional control device.

In the conventional control device (see the left part of FIG. 3), for the target object recognition in the image data captured by the in-vehicle camera, a 64-bit to 128-bit calculation accelerator such as a DSP executes a pre-process of the image data, and an NPU equipped with a large number of MAC calculators executes a DNN process related to the target object recognition using the DNN. Therefore, it is necessary to execute data transfer between the NPU that executes the DNN process and the DSP that executes the pre-process for the DNN process, and there is a difficulty that a process time is required (first difficulty).

In addition, in the DNN process in the NPU, when an operation that cannot be processed by the NPU is included, there was a difficulty that it is necessary to transfer data to the CPU to have it processed, and time required for the data transfer could not be ignored (second difficulty).

Furthermore, in the above conventional configuration, it is necessary to simultaneously input data to a large number of calculators in at least one of a process before and after the DNN process or an operation in a part of layers of the neural network. There is also a difficulty that a process including complicated control such as repeating an if statement cannot be executed efficiently, particularly in the DSP (third difficulty).

In addition, a conventional convolution engine of the NPU often cannot process a confirmation process of a rectangular region such as NMS (Non-Maximum Suppression) that is almost essential in object detection that is post-process, and it is necessary to process it by a DSP or a CPU having a small number of simultaneous calculations (fourth difficulty). As a result, in a control device specialized in an NPU function, even when the DNN process can be executed at high speed, the post-process becomes a bottleneck, and overall performance is degraded. The post-process cannot be ignored because a process load increases due to higher resolution or when multiple DNN models are used.

Thus, in the conventional control device, since the target object recognition process is shared among the DSP, the CPU, and the NPU, data process could not be executed efficiently. Therefore, the control device 50 according to the present embodiment includes a following hardware configuration in order to be able to efficiently execute the data processing by solving at least one of the above first to fourth difficulties.

The control device 50 according to the present embodiment is a processor on a single integrated circuit, including a CPU 100, the multi-core processor 200, and the storage device 300. The CPU 100 is a CPU for multi-core processor control that controls the multi-core processor 200 by executing a control program stored in the storage device 300. The CPU 100 is provided alongside the multi-core processor 200.

The multi-core processor 200 is a scalable processor that executes a target object recognition process. That is, the multi-core processor 200 executes, on the image data indicating the outside of the vehicle and inputted to the control device 50, the DNN process using the DNN which is main body process, the pre-process for the DNN process, and the post-process for the DNN process. Also, the multi-core processor 200 executes, on the image data indicating the outside of the vehicle and inputted to the control device 50, at least one of a classification process, a detection process, a segmentation process, or a pose estimation process as the DNN process, at least one of a water droplet-dirt removal process, a distortion correction process, a resizing process, a cropping process, or a luminance standardization process as the pre-process, and at least one of a NMS process or a top-K process as the post-process. In addition, by having the task schedule of the multi-core processor 200 controlled by the CPU 100, the multi-core processor 200 continuously calculates a series of tasks including a process of executing, on the vehicle-exterior image, a pre-process including at least one of the water droplet-dirt removal process, the distortion correction process, the resizing process, the cropping process, or the luminance standardization process, further executing, on the image after the pre-process, the DNN process including at least one of the classification process, the detection process, the segmentation process, or the pose estimation process, and executing, on the image after the DNN process, the post-process including at least one of the NMS process and the top-K process. Each of these processes will be described later. In addition, the multi-core processor 200 is configured to satisfy a safety requirement for an application up to a predetermined level of safety standard (automotive safety integrity level), that is, level C or level D of ASIL (Automotive Safety Integrity Level). ASIL represents the safety standard of the vehicle defined in an ISO 26262 standard, and includes four stages from ASIL-A to ASIL-D according to the safety standard. In ASIL, a level of the safety standard becomes higher from ASIL-A toward ASIL-D. That is, ASIL-D has a highest level of safety standard, ASIL-C has a second highest level of safety standard, ASIL-B has a third highest level of safety standard, and ASIL-A has a lowest level of safety standard.

The multi-core processor 200 is connected to the CPU 100 by loose coupling. Thereby, each of the multi-core processor 200 and the CPU 100 becomes in a state of high independence, and is excellent in flexibility, compatibility, expandability, easiness of investigating a cause when a malfunction occurs, and the like.

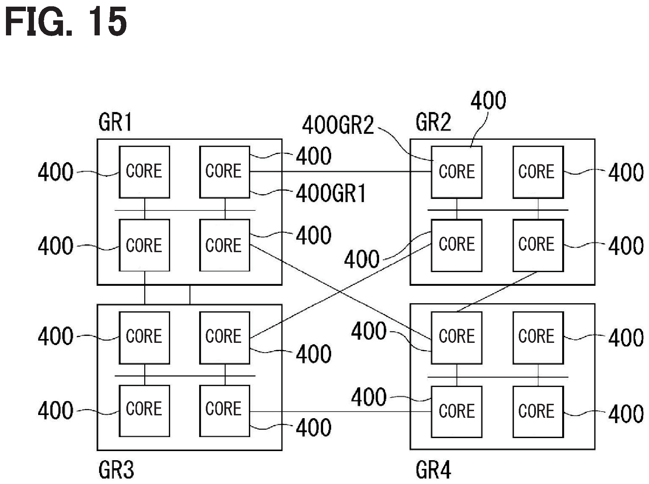

The multi-core processor 200 has multiple cores 400. The multi-core processor 200 executes the DNN process, the pre-process, and the post-process using at least two or more cores 400. The multiple cores 400 are interconnected. In the present embodiment, as an example, the multiple cores 400 are interconnected in a mesh shape. Thereby, a parallel process among the multiple cores 400 becomes possible. Instead of interconnecting the multiple cores 400 in a mesh shape, they may be interconnected in any aspect of a bus shape, a ring shape, a tournament shape, or a pyramid shape. Here, a state in which the multiple cores 400 are interconnected in a pyramid shape will be described with reference to FIG. 15. FIG. 15 is a diagram showing a state in which the multiple cores 400 are interconnected in the pyramid shape. As shown in FIG. 15, the multiple cores 400 form multiple groups GR including two or more cores 400. In each of the multiple groups GR, the two or more cores 400 are all directly interconnected. Then, a specific core 400GR1 in a first group GR1 among the multiple groups GR and a specific core 400GR2 in a second group GR2 among the multiple groups GR are interconnected. Although FIG. 15 illustrates an example in which all of the multiple groups GR are directly interconnected, they may be interconnected indirectly. By thus interconnecting the multiple cores 400 in a pyramid shape, a trade-off between complexity of wiring and a hop count of data transfer can be obtained. Each of the multiple cores 400 has multiple processor elements (PE) 401 and an L2 memory 402 that is a cache memory.

Each of the multiple processor elements 401 includes an ALU (Arithmetic and Logic Unit) 403, a MAC calculator 404, and an LRM (Local Register Memory) 405. The ALU 403 executes logical operations and addition and subtraction. The MAC calculator 404 executes product-sum operations. In the present embodiment, as an example, one 32-bit integer ALU 403 and eight 8-bit MAC calculators 404 are mounted in one processor element 401. A 16-bit MAC calculator may be used instead of the 8-bit MAC calculator 404. The number of ALUs 403 and the number of MAC calculators 404 are not limited to this, and may both be plural.

All of the multiple processor elements 401 are directly or indirectly interconnected. The processor element executing a calculation is interconnected with at least one of other processor elements so that the processor element executing a calculation among the multiple processor elements 401 can refer to calculation data of the other processor elements. In the present embodiment, as an example, the multiple processor elements 401 are interconnected in the mesh shape. Thereby, each processor element 401 becomes a SIMD (Single Instruction, Multiple Data) type processor, and parallel processing becomes possible. Instead of interconnecting the multiple processor elements 401 in a mesh shape, they may be interconnected in any aspect of the bus shape, the ring shape, the tournament shape, or the pyramid shape.

In addition, since each processor element 401 has both the ALU 403 and the MAC calculator 404, a convolution calculation/non-convolution calculation becomes executable within each processor element 401 and among the multiple processor elements 401. Cost performance is high in a case of a network having a high calculation ratio of the ALU 403 in the non-convolution calculation. Furthermore, since each processor element 401 having both the ALU 403 and the MAC calculator 404 is provided so that data can be referred to each other, it is not necessary to execute a part of process by transferring it to the CPU, a DPU, or other accelerators.

In addition, since the multiple processor elements 401 are interconnected in the mesh shape, the number of processor elements 401 is configurable, that is, the number of processor elements 401 is adjustable according to process. Furthermore, since the multi-core processor 200 is processor-based, everything is programmable, and addition of a custom layer is also possible. Therefore, the multi-core processor 200 of the present embodiment does not require the DSP. However, when float/double precision is required, the DSP may have to be used.

As described above, the control device 50 of the present embodiment is a control device for a vehicle that executes automated driving assistance, and includes the multi-core processor 200 having the multiple cores 400 each including the multiple processor elements 401, and the CPU 100 that controls the multi-core processor 200. The multiple cores 400 are interconnected, and each of the multiple processor elements 401 includes the ALU 403 and the MAC calculator 404. The multi-core processor 200 executes, on the image data outside the vehicle inputted to the control device 50, at least one of the classification process, the detection process, the segmentation process, or the pose estimation process as the DNN process, at least one of the water droplet-dirt removal process, the distortion correction process, the resizing process, the cropping process, or the luminance standardization process as the pre-process, and at least one of the NMS process or the Top-K process as the post-process.

By having the above configuration, the control device 50 of the present embodiment can execute both calculations of the neural network and the pr-process and the post-process thereof only by the control device 50 without the need for data transfer among DSPs or data transfer to the CPU. Thereby, the data processing can be efficiently executed and the process time can be accelerated. Specifically, since data transfer between the DNN main body and a part of layers or the pre and post-processes can be omitted, the entire data process can be accelerated. Furthermore, since the control device 50 of the present embodiment is programmable, addition of a custom layer is also possible, and addition of functions by SW becomes possible, thereby improving function expandability by SW such as route search and signal process. In addition, a decrease in development efficiency caused by development spanning the CPU, the DSP, and the like can be avoided, and the development efficiency is improved.

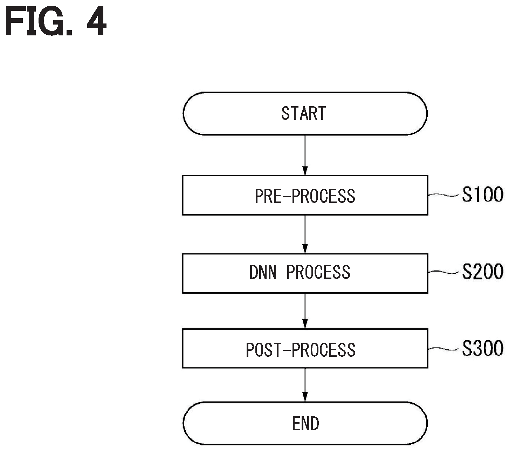

FIG. 4 is a flowchart showing the target object recognition process according to the present embodiment executed by the multi-core processor 200. First, the image data indicating the outside of the vehicle and acquired by the imaging unit 20 is inputted to the control device 50, and RGB/Ch conversion is executed on inputted image data.

In step S100, the multi-core processor 200 executes the pre-process for the DNN process. In the pre-process, the multi-core processor 200 executes, for example, the water droplet-dirt removal process, next executes the distortion correction, the cropping process, and the resizing process, and finally executes the luminance standardization process.

In the water droplet-dirt removal process, the multi-core processor 200 determines whether water drops/dirt are attached to the imaging unit 20 using the image data captured by the imaging unit 20, and controls a water droplet-dirt removal device to remove water drops/dirt attached to the imaging unit 20 (that is, water drops/dirt reflected in the vehicle-exterior image) based on a determination result thereof. The water droplet-dirt removal device includes an air compression unit, a hose, and a nozzle, and ejects compressed air generated in the air compression unit toward the imaging unit 20 from the nozzle via the hose to remove water drops. The water droplet-dirt removal device is not limited to this, and for example, washer fluid may be ejected toward the imaging unit 20 or the imaging unit 20 may be wiped with a camera wiper.

In the distortion correction process, the multi-core processor 200 executes, for example, distortion correction, keystone correction, and the like on the image data captured by the imaging unit 20 according to lens characteristics of a lens included in the imaging unit 20. In addition, in the cropping process, the multi-core processor 200 executes, for example, the cropping process for cropping a predetermined region that is a part of an image targeted for target object recognition in the DNN process on the image data captured by the imaging unit 20. In the resizing process, the multi-core processor 200 executes, for example, the resizing process for resizing an image to an optimal size for target object recognition in the DNN process on the image data captured by the imaging unit 20.

In the luminance standardization process, the multi-core processor 200 standardizes (normalizes) luminance values of images so as to eliminate an influence of a luminance distribution that is different for each image, for example. At this time, even when an image part other than a target object having outstanding luminance exists in a background, luminance standardization is executed so as not to decrease contrast between a target object part and a background part.

In step S200, the multi-core processor 200 executes the DNN process as a main process. In the DNN process, the multi-core processor 200 executes, for example, the classification process (image classification process) for classifying external environment information included in the image after the pre-process into a predetermined target object classification, the detection process (target object detection (object detection) process) for identifying a position, a number, and a type of a target object outside the vehicle from the external environment information included in the image after the pre-process, the segmentation process for dividing the external environment information included in the image after the pre-process by target objects outside the vehicle, the pose estimation process (pose estimation process) for estimating a pose of the target object included in the external environment information included in the image after the pre-process, and the like.

In step S300, the multi-core processor 200 executes the post-process for the DNN process. In the post-process, the multi-core processor 200 determines a detection region (Top-K process, NMS process, etc.), separate painting of regions, and the like using inference result data inferred in the DNN process, for example. The NMS process is a process for removing a part of overlapping candidate regions among candidate regions of the target object included in the image after the DNN process. The Top-K process is a process for extracting the Top K candidate regions with high certainty from the candidate regions of the target object included in the image after the DNN process. The separate painting of regions is, for example, a process for separately painting an image for each region based on a feature amount of a pixel.

In the present embodiment, as an example, the water droplet removal process of the water droplet-dirt removal process in the pre-process of step S100 will be described. Furthermore, a method of determining a detection region using NMS as the post-process of step S300 from multiple candidate regions that are results obtained by inference process in the DNN process of step S200 will be described.

### (Water Droplet Removal process)

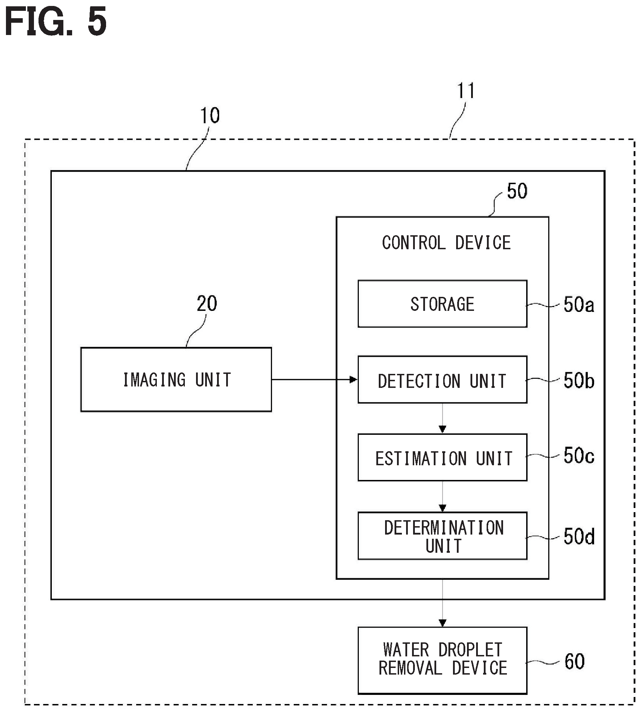

FIG. 5 is a block diagram showing configurations of the target object recognition device 10 and a water droplet removal system 11 according to the present embodiment. The water droplet removal system 11 includes the target object recognition device 10 as an image process device, and a water droplet removal device 60.

The target object recognition device 10 determines whether a water droplet is attached to the imaging unit 20 based on the image data acquired by the imaging unit 20, and transmits a determination result to the water droplet removal device 60. Although FIG. 5 describes a configuration focusing on water droplet removal, the target object recognition device 10 also has a configuration other than a function of detecting a water droplet shown in FIG. 5.

The imaging unit 20 from which water drops are removed by the water droplet removal system 11 may be, for example, an optical sensor that acquires an image via a lens or acquires information on a target object around the vehicle. Specifically, various optical sensors such as a front camera that captures an image in front of the vehicle, a side camera that captures an image on a side of the vehicle, and a back camera that captures an image behind the vehicle can be targeted.

The control device 50 includes a storage 50a, a detection unit 50b, an estimation unit 50c, and a determination unit 50d as functional units. Each of these functional units is implemented by the multi-core processor 200 in the control device 50. That is, these functions of the control device 50 are implemented by causing the multi-core processor 200 (specifically, a specific core 400 including the L2 memory 402 storing a program) to execute a process according to the program stored in the L2 memory 402 in the specific core 400.

The storage 50a stores in advance various process conditions and various parameters used when executing the detection process, the estimation process, the determination process, and the like in the control device 50. Furthermore, the storage 50a stores detection results, estimation results, and the like executed in the control device 50. The detection unit 50b receives the image data acquired by the imaging unit 20. The detection unit 50b executes an edge detection process on received image data to derive an edge strength of each pixel. The detection unit 50b detects a set of pixels having derived edge strength in a specific range as a candidate region to be a candidate for a water droplet region blurred under the influence of a water drop. When the candidate region is the water droplet region, this candidate region has a substantially arc shape, and therefore it is desirable to detect only an arc-shaped region having a substantially arc shape as a candidate region. The detection unit 50b stores a derivation result of the edge strength and a detection result of the candidate region in the storage 50a. The candidate region stored in the storage 50a becomes a determination target by the determination unit 50d.

The estimation unit 50c receives the detection result of the candidate region. The estimation unit 50c estimates a corresponding circle so as to inscribe the candidate region based on the detection result of the candidate region. The estimation unit 50c stores an estimation result of the circle in the storage 50a.

The determination unit 50d receives the derivation result of the edge strength, the detection result of the candidate region, the estimation result of the corresponding circle so as to inscribe the candidate region, and the like stored in the storage 50a. The determination unit 50d determines whether the candidate region stored as the determination target in the storage 50a is a water droplet region based on the above-described extraction result, detection result, estimation result, and the like, to determine attachment of a water droplet to the imaging unit 20. The determination unit 50d transmits the determination result to the water droplet removal device 60.

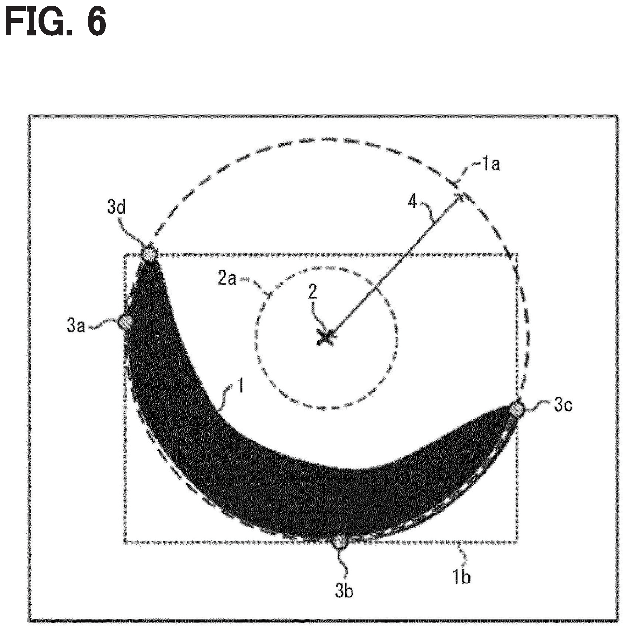

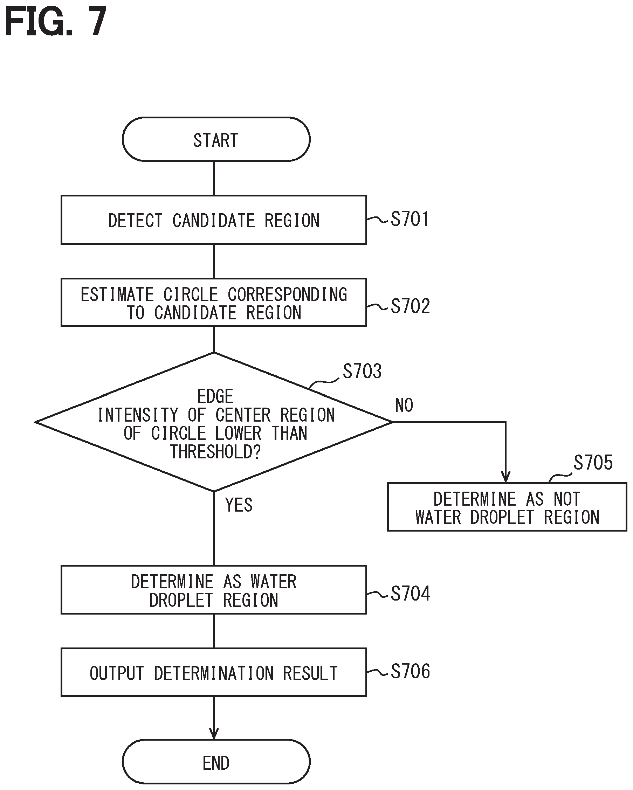

Hereinafter, an image process in the control device 50 will be described more specifically with reference to FIGS. 6 and 7.

FIG. 6 is a diagram showing an outline of the image process according to the present embodiment. FIG. 7 is a flowchart showing a process procedure executed by the multi-core processor 200 of the target object recognition device 10 according to the present embodiment.

The detection unit 50b receives the image data acquired by the imaging unit 20. Next, the detection unit 50b detects an edge using a well-known edge detection method such as differentiating a luminance of each pixel on the received image data. The detection unit 50b derives the edge strength of each pixel of the image data. In this example, an edge is detected using the luminance of each pixel, but an edge may be detected for each color component value (R value, G value, B value, etc.) of each pixel. In this case, an added value or a maximum value of the edge strength for each color component value may be used as the edge strength of the pixel.

Next, the detection unit 50b detects a set of pixels having derived edge strength in a specific range equal to or larger than a predetermined first threshold value and equal to or smaller than a predetermined second threshold value as a candidate region 1 that becomes a candidate for a water droplet region (step S701). At this time, it is desirable to detect only an arc-shaped region having a substantially arc shape as the candidate region 1.

Next, the estimation unit 50c estimates a corresponding circle 1a based on the detected candidate region 1 so that the candidate region 1 is inscribed (step S702). In step S702, for example, a following method can be used as a method of estimating the circle 1a.

As shown in FIG. 6, the estimation unit 50c extracts multiple points of interest 3a to 3d (hereinafter, collectively referred to as points of interest 3), which are intersections of a rectangle 1b inscribed with the detected candidate region 1 and the candidate region 1. Here, as the rectangle 1b, for example, a rectangle whose sides extend in a horizontal direction and a vertical direction can be selected. In that case, as the points of interest 3, a minimum point in a horizontal direction (point of interest 3a), a maximum point in a vertical direction (point of interest 3b), a maximum point in a horizontal direction (point of interest 3c), and a minimum point in a vertical direction (point of interest 3d) in the candidate region 1 are extracted respectively. The rectangle 1b does not necessarily have to be a rectangle whose sides extend in a horizontal direction and a vertical direction, and a rectangle whose sides extend inclined from a horizontal direction and a vertical direction may be selected.

Then, when a center 2 that is approximately equidistant from extracted plurality of points of interest 3 is estimated, the circle 1a is estimated as a circle passing through the multiple points of interest 3 centering on the center 2. The center 2 estimated here does not need to be completely equidistant from the multiple points of interest 3. For example, when a completely equidistant point is located between pixels, multiple pixels included in a periphery thereof may be estimated as the center 2. Furthermore, the estimated circle 1a does not need to pass through all the points of interest 3, and may pass through a vicinity of a part of the points of interest 3, for example.

Next, the determination unit 50d determines whether the candidate region is the water droplet region based on an edge strength in the estimated circle 1a. For example, as shown in FIG. 6, the determination unit 50d determines an edge strength in a central region 2a within a predetermined range from the center 2 (step S703).

Here, when an average edge strength in the central region 2a is lower than a predetermined threshold value (step S703, Yes), it is determined that the candidate region 1 is a water droplet region (more accurately, a part of the water droplet region) (step S704). That is, the determination unit 50d determines that a water droplet is attached to the imaging unit 20.

When the average edge strength in the central region 2a is higher than a predetermined threshold value (step S703, No), it is determined that the candidate region 1 is not a water droplet region (step S705).

Then, the determination unit 50d outputs a determination result to the water droplet removal device 60 (step S706), and ends process.

The target object recognition device 10 according to the present embodiment determines attachment of the water droplet by utilizing a state that an edge strength is low in the central region 2a among luminance changes in the circle 1a.

For the central region 2a according to the present embodiment, for example, a circle centered on the center 2 and having a radius smaller than a radius 4 of the circle 1a can be used. As the central region 2a, a circle having a radius smaller than 1/2 of the radius 4 centered on the center 2 is preferably used, and a circle having a radius smaller than 1/4 of the radius 4 is more preferably used.

In the present embodiment, the average edge strength in the central region 2a is determined, but instead of the central region 2a, only an edge strength of one pixel corresponding to the center 2 may be determined. In this case, when the edge strength of the center 2 is lower than a predetermined threshold value, the determination unit 50d determines that the candidate region 1 is the water droplet region. When the edge strength of the center 2 is higher than a predetermined threshold value, it may be determined that the candidate region 1 is not the water droplet region.

In step S703 according to the present embodiment, the determination unit 50d performs a determination using the edge strength derived by the detection unit 50b. However, the determination unit 50d may perform a determination using a parameter different from the edge strength derived by the detection unit 50b (for example, a parameter that substantially indicates an edge strength such as a spatial frequency).

When an attached substance other than the water droplet is attached to the imaging unit 20, the candidate region 1 as a set of pixels having an edge strength in a specific range does not have an arc shape, but has a rectangular shape or a circular shape, for example. In addition, the edge strength does not decrease at a position corresponding to the central region 2a of the candidate region 1. Therefore, when the candidate region 1 has the rectangular shape or the circular shape, or when the edge strength in a central region of the candidate region 1 is high, it can be determined that what is attached to the imaging unit 20 is other dirt that is not the water droplet.

### (NMS process)

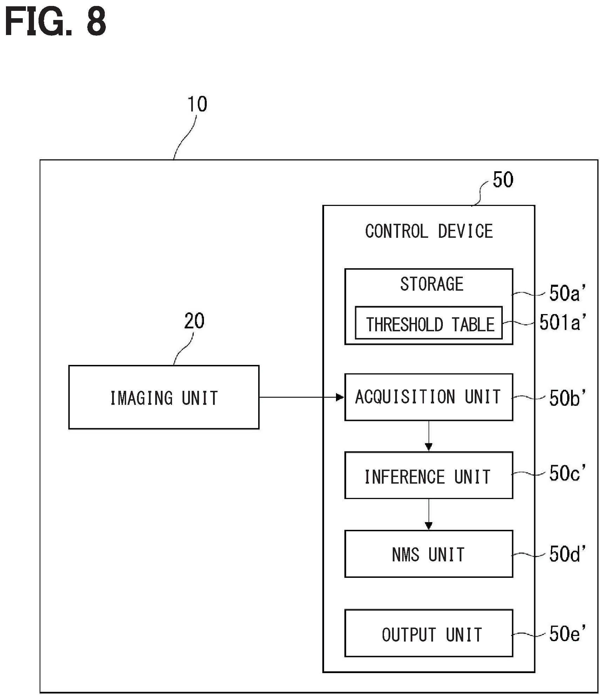

FIG. 8 is a block diagram showing the configuration of the target object recognition device 10 of the present embodiment. The control device 50 includes a storage 50a', an acquisition unit 50b', an inference unit 50c', an NMS unit 50d', and an output unit 50e' as functional units. Each of these functional units is implemented by the multi-core processor 200 in the control device 50. That is, these functions of the control device 50 are implemented by causing the multi-core processor 200 (specifically, a specific core 400 including the L2 memory 402 storing a program) to execute a process according to the program stored in the L2 memory 402 in the specific core 400. Although FIG. 8 describes a configuration focusing on the NMS process, the target object recognition device 10 also has a configuration other than the NMS process shown in FIG. 8.

The acquisition unit 50b' acquires image data captured by the imaging unit 20.

The inference unit 50c' executes an inference process. Specifically, the inference unit 50c' executes object detection using a trained model by machine learning. The inference unit 50c' executes a process for identifying a position (region) and a type of a predetermined object from the image data using a well-known object detection algorithm. As for a type of object to be detected, for example, when the target object recognition device 10 is used for control of automated driving of the vehicle, a detection target by the target object recognition device 10 is an object visible from the vehicle. Specifically, automobiles, motorcycles, people, bicycles, traffic lights, white lines on a road, and the like are detection targets.

As a well-known object detection algorithm, for example, R-CNN, Fast R-CNN, Faster R-CNN, YOLO, SSD, and the like can be cited. In the present embodiment, the inference unit 50c' uses YOLO for the object detection algorithm. Results obtained by the inference process by the inference unit 50c' include a type of an object, a bounding box indicating a region of an object, and the confidence score indicating an existence probability of an object. The confidence score is, for example, a numerical value of 0 or more and 1 or less, and as its value approaches "1", it indicates that a degree of confidence is higher.

A bounding box obtained by the inference unit 50c' is a result at a stage before finally outputting a result of object detection, and is not a finalized result. For this reason, a bounding box obtained by the inference unit 50c' is expressed as a candidate region. As can be understood from the above, the control device 50 extracts a candidate region of an object from the image data acquired by the imaging unit 20. The object detection method for detecting an object from image data includes an extraction process of extracting the candidate region of the object from image data. The candidate region is not limited to only one for one object, and multiple candidate regions may be extracted.

The NMS unit 50d' executes the NMS process which is process for removing a part of overlapping candidate regions. Specifically, overlapping candidate regions refer to multiple candidate regions partially overlapping each other. By the NMS process, at least one candidate region among multiple candidate regions overlapping each other is removed. In the NMS process, IoU (Intersection over Union), which is an overlap ratio between candidate regions, is calculated. That is, the control device 50 calculates the overlap ratio between candidate regions. The object detection method includes a calculation process of calculating the overlap ratio between candidate regions.

The loU is calculated by a following equation (1). $IoU = X / Y$ (1)
- X:: Area of a part where two candidate regions overlap each other.
- Y:: Total area of two candidate regions overlapping each other.

The loU is one of indices indicating how much candidate regions overlap each other, and as its value approaches "1", it indicates that they are more overlapping.

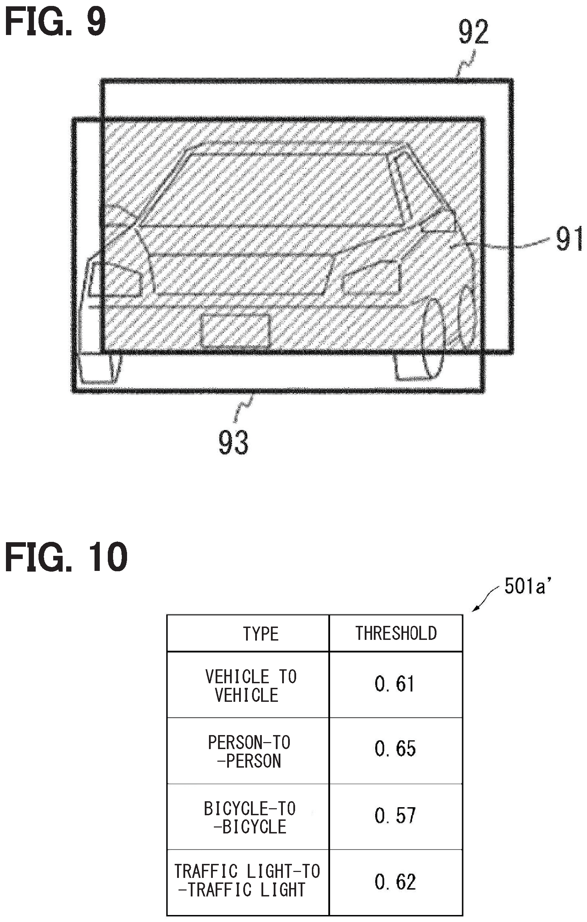

FIG. 9 is a schematic diagram for illustrating IoU. In FIG. 9, it is assumed that an automobile 91, which is a detection target, is included in an image, the automobile 91 is set to a target, and a first candidate region 92 and a second candidate region 93 are extracted. Both the first candidate region 92 and the second candidate region 93 are rectangular regions. A shape of a candidate region is not limited to a rectangle, and may be other shapes.

In an example shown in FIG. 9, X in the above equation (1) is an area of a part where the first candidate region 92 and the second candidate region 93 overlap (a hatched part provided with diagonal lines). The Y in the equation (1) is obtained by adding an area of the first candidate region 92 and an area of the second candidate region 93, and subtracting an area of a part where the first candidate region 92 and the second candidate region 93 overlap (an area obtained as X above) from an added value.

Specifically, the NMS unit 50d' determines a candidate region to be left from mutually overlapping candidate regions based on an obtained value of loU and a threshold value included in a threshold value table 501a', which is stored in the storage 50a' and includes a threshold value used for the object detection process. That is, the control device 50 determines a candidate region to be left from mutually overlapping candidate regions based on the overlap ratio between candidate regions and a threshold value stored in the storage 50a'. The object detection method includes a determination process of determining the candidate region to be left from mutually overlapping candidate regions based on an overlap ratio and a preset threshold value. A candidate region determined to be left is a region finally outputted as a region of an object. A region finally outputted as a region of an object is a region displayed or the like as a bounding box.

Specifically, when the obtained value of IoU exceeds a threshold value in the threshold value table 501a', a part of a candidate region is removed. The candidate region that is not removed is the above-described candidate region to be left. That is, the control device 50 removes a part of a candidate region when the overlap ratio between candidate regions exceeds a threshold value stored in the storage 50a'. With such a configuration, it is possible to remove a part of multiple candidate regions that have a large overlap ratio and are highly likely to be candidate regions for the same object. That is, it is possible to appropriately remove an unnecessary candidate region and appropriately detect the object.

More specifically, among mutually overlapping candidate regions, a candidate region having the highest confidence score is set to the candidate region to be left, and others are removed. That is, the control device 50 removes mutually overlapping candidate regions except for the candidate region having the highest degree of confidence. With such a configuration, it is possible to leave a region having the highest confidence from regions estimated to be candidate regions for the same object, and to improve the confidence of the object detection.

According to the present embodiment, a process for removing a part of overlapping candidate regions is executed targeting candidate regions estimated to be objects of the same type. Calculation of IoU is executed for candidate regions estimated to have the same type of object among candidate regions determined to overlap each other. Even when candidate regions overlap each other, IoU is not calculated for candidate regions estimated to have different types of objects. That is, in the present embodiment, the control device 50 calculates the overlap ratio for candidate regions of objects of the same type. According to such a configuration, it is possible to simplify the NMS process as much as possible and remove an unnecessary candidate region.

In an example shown in FIG. 9, it is assumed that both the first candidate region 92 and the second candidate region 93 have a type of object estimated to be an automobile. That is, the first candidate region 92 and the second candidate region 93 are targets for which IoU calculation is executed. Then, it is assumed that an loU value between the first candidate region 92 and the second candidate region 93 exceeds a predetermined threshold value. In addition, it is assumed that a confidence score of the first candidate region 92 is 0.9, and a confidence score of the second candidate region 93 is 0.5. In this case, of the extracted first candidate region 92 and second candidate region 93, the first candidate region 92 having the highest confidence score is left, and the second candidate region 93 is removed. In an example shown in FIG. 9, IoU of the first candidate region 92 and loU of the second candidate region 93 are calculated by comparison with an unillustrated bounding box having a maximum score.

Although FIG. 9 shows an example in which two candidate regions of the same type overlap, this is an exemplification. There may also be a candidate region for which the overlapping candidate region does not exist. One candidate region having no overlapping candidate region is determined as the above-described candidate region to be left, and removal is not executed.

In addition, three or more candidate regions of the same type may overlap. In this case, two candidate regions are selected from all candidate regions overlapping each other, and it is determined whether the loU value exceeds a threshold value. When a threshold value is exceeded, one candidate region is removed according to a confidence score. When a threshold value is not exceeded, both of two candidate regions are left. Next, from remaining candidate regions, two candidate regions are selected in a combination different from a previously selected combination. Comparison between the above-described loU value and threshold value, and removal of a candidate region if necessary, are executed. Subsequently, for remaining candidate regions, a process similar to the previous process is executed. The above process is repeated for candidate regions whose loU values exceed a threshold value until the number of candidate regions becomes one. Thereby, it is possible to narrow down the number of candidate regions targeting the same object to one. Further, the remaining candidate region can be left as a region targeting a different object.

The output unit 50e' executes a process for outputting results obtained by the above-described inference process and NMS process. The output unit 50e' outputs final results of a position and a type of a detected object to, for example, a display device, a control device that executes control of the vehicle, or the like.

Next, details of a threshold value stored in the storage 50a' will be described. In the present embodiment, a threshold value is stored in a format of the threshold value table 501a'. FIG. 10 is a diagram showing an example of the threshold value table 501a'. In an example shown in FIG. 10, the target object recognition device 10 detects automobiles, people, bicycles, and traffic lights from image data captured by the imaging unit 20 that captures an image of a periphery of the subject vehicle. As shown in FIG. 10, a threshold value is set for each type of object. In an example shown in FIG. 10, threshold values are set separately for automobiles, people, bicycles, and traffic lights, respectively.

It is conceivable that a threshold value is uniformly the same regardless of a type of object. However, with such a configuration, it is considered that it becomes difficult to set appropriate threshold values for all objects due to, for example, differences in size, shape, and the like depending on types of objects. As a result, it is assumed that candidate regions are excessively removed by NMS process, and an undetected object occurs. Alternatively, it is assumed that a candidate region that originally should be removed is not removed by NMS process, and erroneous detection of an object occurs. In this regard, when a threshold value is set for each type of object as in the present embodiment, it is possible to appropriately determine a threshold value according to a type of object. It is possible to reduce the possibility that an undetected object or an erroneous detection of an object occurs. That is, it is possible to improve the object detection performance.

In the present embodiment, since a part of overlapping candidate regions is removed targeting candidate regions estimated to be objects of the same type, a threshold value is set for objects of the same type. A threshold value is not set for objects of different types from each other. For example, a threshold value is set for vehicles, but is not set between a vehicle and a person.

A threshold value is determined in advance using, for example, the target object recognition device 10 or a device different from the target object recognition device 10, and stored in the storage 50a'. For example, a configuration may be such that the control device 50 of the target object recognition device 10 obtains a threshold value and stores it in the storage 50a'. Further, for example, a threshold value may be obtained by another device and distributed from the other device to the target object recognition device 10. Instead of distribution, a threshold value obtained by another device may be stored in the storage 50a' using a portable recording medium. Further, for example, a threshold value may be obtained by another device and stored in the storage 50a' by a manual input by a person.

For example, a threshold value may be determined by tentatively changing multiple values, executing the object detection process in a case of each value, and obtaining an evaluation index for a result of detection process of each object. The object detection process is a process including the above-described inference process and the NMS process. An evaluation index of the object detection process may be mAP (mean Average Precision). For example, a threshold value may be determined so that mAP becomes highest. By obtaining a threshold value for each type of object by such a method, an appropriate threshold value can be obtained, and it is possible to improve the object detection performance.

A threshold value may be determined, for example, by a method such as well-known hyperparameter tuning. A threshold value may be determined, for example, using Bayesian optimization among hyperparameter tuning. In the present embodiment, a threshold value is a value in a range of 0 to 1. In Bayesian optimization, multiple (for example, 10 or the like) values are randomly selected in a range of 0 to 1, the object detection process is executed on them, and an evaluation index (mAP) is calculated. A process of determining a value to be examined next according to a result of the evaluation index is repeated, and an optimal threshold value is determined.

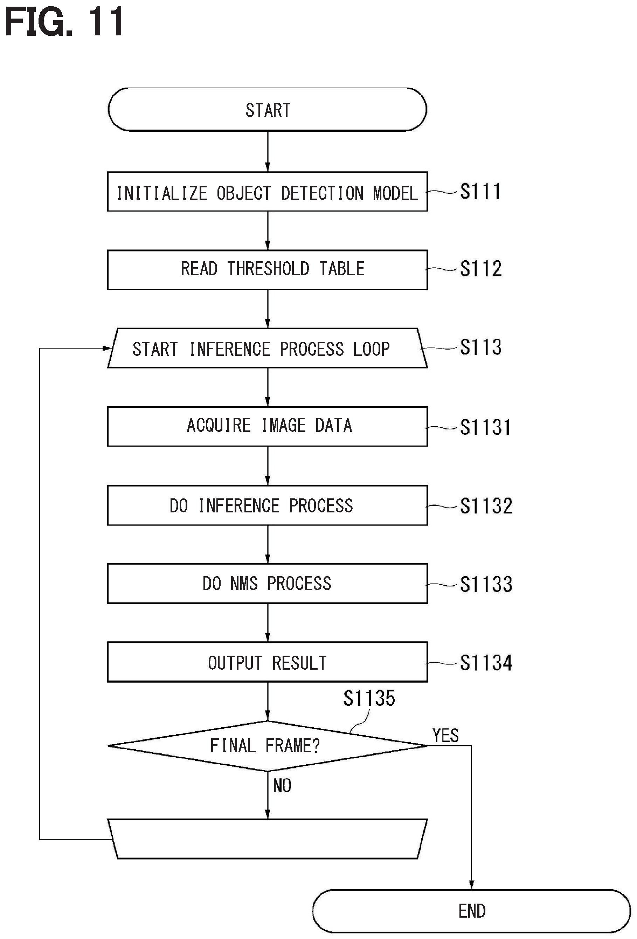

FIG. 11 is a flowchart showing an example of object detection process executed by the target object recognition device 10 according to the present embodiment.

In step S111, the control device 50 initializes an object detection model. The object detection model is the above-described trained model. For example, the control device 50 executes reading of a weight parameter stored in the storage 50a', or the like. When initialization of the object detection model is completed, the process proceeds to next step S112.

In step S112, the control device 50 executes reading of the threshold value table 501a' stored in the storage 50a'. When reading of the threshold value table 501a' is completed, the process proceeds to next step S113.

In step S113, the control device 50 starts an inference process loop. The inference process loop includes a process of step S1131, a process of step S1132, a process of step S1133, a process of step S1134, and a process of step S1135.

In step S1131, the acquisition unit 50b' acquires image data inputted from the imaging unit 20. Specifically, the acquisition unit 50b' acquires image data at a predetermined cycle. A predetermined cycle is appropriately determined according to an object of object detection, and the like. When the image data is acquired, the process proceeds to next step S1132.

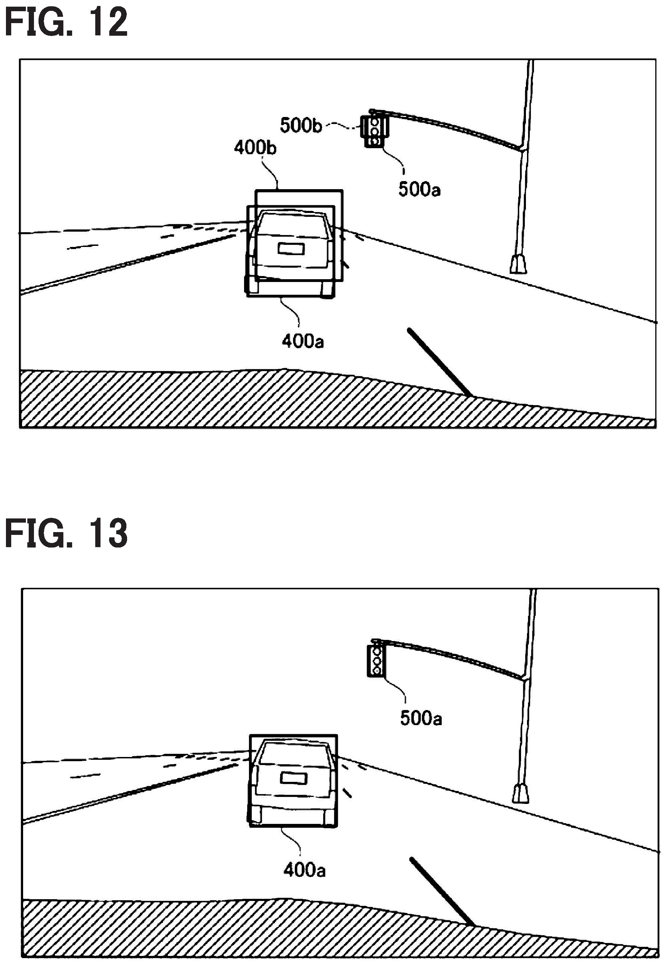

In step S1132, the inference unit 50c' executes the inference process using the object detection model targeting the image data. By the inference process, a candidate region of an object to be detected, a confidence score, and a type of object are obtained from the image data. FIG. 12 is a schematic diagram showing an example of a result of inference process by the inference unit 50c'. In an example shown in FIG. 12, automobiles and traffic lights are included in a detection target object, and automobiles and traffic lights are detected as types of objects. Specifically, two candidate regions 400a, 400b classified as automobiles are extracted. In addition, two candidate regions 500a, 500b classified as traffic lights are extracted. When the inference process by the inference unit 50c' is completed, the process proceeds to next step S1133.

Hereinafter, for ease of distinguishing names, one of two candidate regions 400a, 400b classified as automobiles is referred to as a first vehicle candidate region 400a, and the other is referred to as a second vehicle candidate region 400b. In addition, one of two candidate regions 500a, 500b classified as traffic lights is referred to as a first traffic light candidate region 500a, and the other is referred to as a second traffic light candidate region 500b.

In step S1133, the NMS unit 50d' executes above-described NMS process on an inference result obtained in step S1132. Here, an inference result shown in FIG. 12 described above is obtained, and a threshold value shown in FIG. 10 is to be used in NMS process.

The NMS unit 50d' calculates loU for two first vehicle candidate region 400a and second vehicle candidate region 400b classified as automobiles, and determines whether a calculation result of IoU exceeds 0.61 which is a threshold value between vehicles obtained from the threshold value table 501a'. When a value of IoU exceeds 0.61, the NMS unit 50d' determines that two vehicle candidate regions 400a, 400b represent a region of the same automobile. In this case, the NMS unit 50d' removes one having a smaller confidence score of the first vehicle candidate region 400a and the second vehicle candidate region 400b. When a value of IoU is 0.61 or less, the NMS unit 50d' determines that the first vehicle candidate region 400a and the second vehicle candidate region 400b represent mutually different automobile regions, and determines to leave two vehicle candidate regions 400a, 400b.

Further, the NMS unit 50d' calculates loU for first traffic light candidate region 500a and second traffic light candidate region 500b classified as traffic lights, and determines whether a calculation result of IoU exceeds 0.62 which is a threshold value between traffic lights obtained from a threshold value table 121. When a value of IoU exceeds 0.62, the NMS unit 113 determines that two traffic light candidate regions 500a, 500b represent a region of the same traffic light. In this case, the NMS unit 50d' removes one having a smaller confidence score of the first traffic light candidate region 500a and the second traffic light candidate region 500b. When a value of IoU is 0.62 or less, the NMS unit 50d' determines that the first traffic light candidate region 500a and the second traffic light candidate region 500b represent mutually different traffic light regions, and determines to leave two traffic light candidate regions 500a, 500b.

FIG. 13 is a schematic diagram showing an example of a result of the NMS process by the NMS unit 50d'. FIG. 13 is premised on a case where the inference result shown in FIG. 12 is obtained. Further, the value of IoU calculated for the first vehicle candidate region 400a and the second vehicle candidate region 400b exceeds 0.61 which is the threshold value between vehicles. Further, the value of IoU calculated for the first traffic light candidate region 500a and the second traffic light candidate region 500b exceeds 0.62 which is the threshold value between traffic lights.

In the example shown in FIG. 13, as a result of the NMS process, the first vehicle candidate region 400a having the high confidence score is left out of the two vehicle candidate regions 400a, 400b estimated to represent the region of the same vehicle. Further, as a result of the NMS process, the first traffic light candidate region 500a having the high confidence score is left out of the two traffic light candidate regions 500a, 500b estimated to represent the region of the same traffic light. When the NMS process is completed, the process proceeds to next step S1134.

In step S1134, the output unit 50e' executes a process of outputting a final result of the object detection process executed on an input image. In the examples shown in FIG. 12 and FIG. 13, a result, in which one bounding box is attached to each of the automobile and the traffic light, is the final result of the object detection process. When the output process is completed, the process proceeds to next step S1135.

In step S1135, the control device 50 confirms whether the process has been executed on a final frame. That is, the control device 50 confirms whether or not the process has been completed for all the image data. When the process has been completed for all the image data (Yes in step S1135), the object detection process shown in FIG. 11 ends. On the other hand, when the process has not been completed for all the image data (No in step S1135), the inference process loop including the process from step S1131 to step S1135 is repeated.

In the present embodiment, the NMS process is used to determine the detection region, but the Top-K process may be used to determine the detection region. In the Top-K process, the detection region is determined by extracting only the Top K pieces having high certainty of class belonging.

### (Vehicle Travel Control System)

The result of the target object recognition process can be used for vehicle travel control. For example, the result of the target object recognition process can be used for automated driving control. In the automated driving control, for example, whether to execute a lane change is determined based on a recognition result of a peripheral vehicle. Therefore, improving the precision of the target object recognition process is important in the automated driving control. Further, the result of the target object recognition process may be used for driving assistance control such as ACC (Adaptive Cruise Control) or LTA (Lane Tracing Assist).

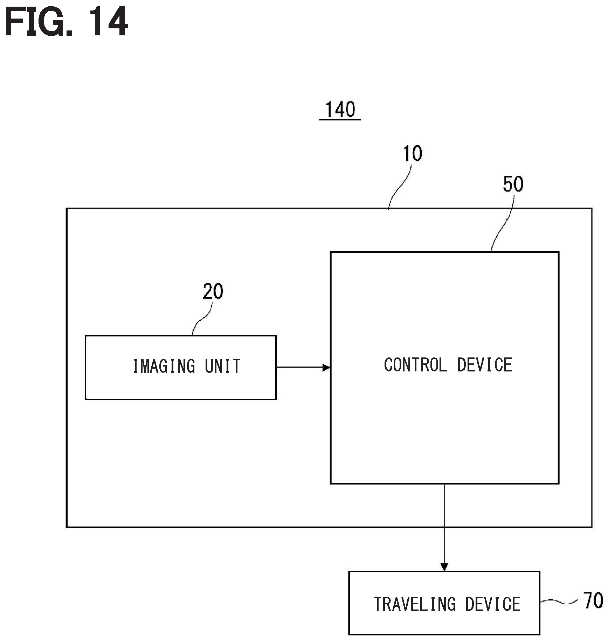

FIG. 14 is a block diagram showing a configuration example of a vehicle travel control system 140 according to the present embodiment. The vehicle travel control system 140 is mounted on the vehicle, and executes the vehicle travel control for controlling travel of the vehicle.

More specifically, the vehicle travel control system 140 includes a traveling device 70 in addition to the above-described target object recognition device 10. The traveling device 70 includes a steering device, a driving device, a braking device, and the like. The steering device steers wheels. The driving device is a power source that generates a driving force. The driving device is, for example, an electric motor or an engine. The braking device generates a braking force.

The control device 50 executes the vehicle travel control based on the result of the target object recognition process by the target object recognition device 10. The vehicle travel control includes steering control and acceleration/deceleration control. The control device 50 executes the steering control by appropriately operating the steering device. Further, the control device 50 executes the acceleration/deceleration control by appropriately operating the driving device and the braking device.

### (Other Embodiments)

The embodiment of the present disclosure has been described above, but the present disclosure is not interpreted as being limited to the above-described embodiment, and can be applied to various embodiments and combinations without departing from the gist of the present disclosure.

The controller and the method thereof described in the present disclosure may be implemented by a dedicated computer provided by configuring a processor and a memory programmed to execute one or multiple functions embodied by a computer program. Alternatively, the controller and the method thereof described in the present disclosure may be implemented by a dedicated computer provided by configuring a processor with one or more dedicated hardware logic circuits. Alternatively, the controller and the method thereof described in the present disclosure may be implemented by one or more dedicated computers configured by a combination of a processor and a memory programmed to execute one or multiple functions, and a processor configured by one or more hardware logic circuits. Further, the computer program may be stored in a computer-readable non-transitory tangible storage medium as an instruction executed by a computer. As described above, the present disclosure is not limited to the above-described embodiments in any way, and can be implemented in various forms without departing from the spirit of the present disclosure.

The present disclosure may be provided in each aspect described below.

### (First Aspect)

A processor (50) is on an integrated circuit used for a vehicle that executes automated driving assistance based on a vehicle exterior image obtained by capturing by a camera that captures an external environment of a subject vehicle, and includes: a multi-core processor (200) including a plurality of cores (400) each having a plurality of processor elements (401); and a CPU (100) configured to control the multi-core processor. In the multi-core processor, the plurality of cores are interconnected. Each of the plurality of processor elements includes an ALU (403) configured to execute a logical operation, addition, and subtraction, and a MAC calculator (404) configured to execute a product-sum operation, and is further interconnected with at least one other processor element so as to refer to calculation data of the other processor element during a calculation. The CPU controls a task schedule of the multi-core processor, and causes the multi-core processor to continuously calculate a series of tasks including a process of: executing a pre-process on the vehicle exterior image, the pre-process including at least one of a water droplet-dirt removal process of removing water drops/dirt reflected in the vehicle exterior image, a distortion correction process of correcting distortion of the vehicle exterior image, a resizing process of changing a size of the vehicle exterior image, a cropping process of cropping a predetermined region from the vehicle exterior image, or a luminance standardization process of standardizing luminance of the vehicle exterior image; executing a DNN process on the image after the pre-process, the DNN process including at least one of a classification process of classifying external environment information included in the image after the pre-process into a predetermined target object classification, a detection process of identifying a position, a count, and a type of a target object outside the subject vehicle from the external environment information included in the image after the pre-process, a segmentation process of dividing the external environment information included in the image after the pre-process by the target object outside the subject vehicle, or a pose estimation process of estimating a pose of the target object included in the external environment information in the image after the pre-process; and executing a post-process on the image after the DNN process, the post-process including at least one of a NMS process of removing a part of an overlapping candidate region among a candidate region of the target object included in the image after the DNN process, or a Top-K process of extracting K candidate regions having highest confidence scores.

### (Second Aspect)

A control device (50) for a vehicle that executes automated driving assistance includes: a multi-core processor (200) including a plurality of cores (400) each having a plurality of processor elements (401); and a CPU (100) configured to control the multi-core processor. The plurality of cores are interconnected. Each of the plurality of processor elements includes an ALU (403) and a MAC calculator (404). The multi-core processor executes, on image data indicating an outside of the vehicle inputted to the control device, at least one of a classification process, a detection process, a segmentation process, or a pose estimation process as a DNN process using a DNN (Deep Neural Network), at least one of a water droplet-dirt removal process, a distortion correction process, a resizing process, a cropping process, or a luminance standardization process as a pre-process for the DNN process, and at least one of a NMS process or a Top-K process as a post-process for the DNN process.

According to the present aspect, the control device can execute both calculations of a neural network and the pre-process and the post-process thereof only by the control device 50 without a need for data transfer among DSPs or data transfer to the CPU. Thereby, data processing can be efficiently executed and processing time can be accelerated. Specifically, since data transfer between the DNN main body and a part of layers or pre/post-process can be omitted, the entire data process can be accelerated. Furthermore, since the control device 50 of the present embodiment is programmable, addition of a custom layer is also possible, and addition of functions by SW becomes possible. Thereby, function expandability by SW such as route search and signal process is improved. In addition, it is possible to avoid a decrease in development efficiency caused by development spanning the CPU, the DSP, and the like, and improve the development efficiency.

### (Third Aspect)

In the control device according to the second aspect, the control device is a processor on a single integrated circuit.

According to the present aspect, both the computation of the neural network and its pre- and post-processes can be executed by a single integrated circuit processor.

### (Fourth Aspect)

In the control device according to the second or third aspect, the multi-core processor is connected to the CPU by loose coupling.

According to the present aspect, each of the multi-core processor and the CPU becomes in a state of high independence, and is excellent in flexibility, compatibility, expandability, easiness of investigating a cause when a malfunction occurs, and the like.

### (Fifth Aspect)

In the control device according to any one of second to fourth aspects, the multi-core processor executes the DNN process, the pre-process, and the post-process on the image data using at least two or more cores among the plurality of cores.

According to the present aspect, the control device can execute the DNN process, the pre-process, and the post-process on image data for automated driving assistance using at least two or more cores.

### (Sixth Aspect)

In the control device according to any one of the second to fifth aspects, the plurality of processor elements are interconnected so that a processor element executing a calculation among the plurality of processor elements is able to refer to calculation data of other processor elements.

According to the present embodiment, it is possible to adjust the number of processor elements according to the processes.

### (Seventh Aspect)

In the control device according to the sixth aspect, the plurality of processor elements are interconnected in any aspect of a bus shape, a mesh shape, a ring shape, or a tournament shape.

According to the present aspect, it is possible to more flexibly adjust the number of processor elements according to the processes.

### (Eighth Aspect)

In the control device according to the sixth aspect, the plurality of processor elements form a plurality of groups each including two or more processor elements. In each of the plurality of groups, the two or more processor elements are all directly interconnected. A specific processor element in a first group among the plurality of groups and a specific processor element in a second group among the plurality of groups are interconnected.

According to the present aspect, it is possible to more flexibly adjust the number of processor elements according to the processes.

### (Ninth Aspect)

In the control device according to any one of the second to eighth aspects, the plurality of cores are interconnected in any aspect of a bus shape, a mesh shape, a ring shape, or a tournament shape.

According to the present aspect, parallel processing among a plurality of cores becomes possible.

### (Tenth Aspect)

In the control device according to any one of the second to eighth aspects, the plurality of cores form a plurality of groups including two or more cores. In each of the plurality of groups, the two or more cores are all directly interconnected. A specific core in a first group among the plurality of groups and a specific core in a second group among the plurality of groups are interconnected.

According to the present aspect, parallel processing among a plurality of cores becomes possible.

### (Eleventh Aspect)

A target object recognition device (10) is mounted on a vehicle, and includes: an imaging unit (20) configured to acquire image data indicating an outside of the vehicle; and the control device (50) according to any one of the second to tenth aspects.

### (Twelfth Aspect)

In the target object recognition device according to the eleventh aspect, the imaging unit is mounted on the vehicle so as to capture an image of a scenery outside the vehicle, and includes an imaging element (20a) having full HD to 8K pixels.

### (Thirteenth Aspect)

A vehicle travel control system (140) includes: the target object recognition device (10) according to the eleventh or twelfth aspect; and a traveling device (70). The control device executes vehicle travel control for controlling the traveling device based on a result of a target object recognition process by the target object recognition device.

Although the present disclosure has been described in accordance with examples, it is understood that the present disclosure is not limited to the examples and structures. The present disclosure includes various modifications and equivalents thereof. In addition, various combinations and forms, and other combinations and forms including only one element, more, or less thereof, also fall within the scope and ideological range of the present disclosure.

## Claims

1. A processor (50) on an integrated circuit used for a vehicle that executes automated driving assistance based on a vehicle exterior image obtained by capturing by a camera that captures an external environment of a subject vehicle, the processor comprising:
a multi-core processor (200) including a plurality of cores (400) each having a plurality of processor elements (401); and
a CPU (100) configured to control the multi-core processor,
wherein
in the multi-core processor, the plurality of cores are interconnected,
each of the plurality of processor elements
includes
an ALU (403) configured to execute a logical operation, addition, and subtraction, and
a MAC calculator (404) configured to execute a product-sum operation, and
is further interconnected with at least one other processor element so as to refer to calculation data of the other processor element during a calculation,
the CPU controls a task schedule of the multi-core processor, and causes the multi-core processor to continuously calculate a series of tasks including a process of:
executing a pre-process on the vehicle exterior image, the pre-process including at least one of
a water droplet-dirt removal process of removing water drops or dirt reflected in the vehicle exterior image,
a distortion correction process of correcting distortion of the vehicle exterior image,
a resizing process of changing a size of the vehicle exterior image,
a cropping process of cropping a predetermined region from the vehicle exterior image, or
a luminance standardization process of standardizing luminance of the vehicle exterior image;
executing a DNN process on an image after the pre-process, the DNN process including at least one of
a classification process of classifying external environment information included in the image after the pre-process into a predetermined target object classification,
a detection process of identifying a position, a count, and a type of a target object outside the subject vehicle from the external environment information included in the image after the pre-process,
a segmentation process of dividing the external environment information included in the image after the pre-process by the target object outside the subject vehicle, or
a pose estimation process of estimating a pose of the target object included in the external environment information in the image after the pre-process; and
executing a post-process on an image after the DNN process, the post-process including at least one of
a NMS process of removing a part of an overlapping candidate region among a candidate region of the target object included in the image after the DNN process, or
a Top-K process of extracting K candidate regions having highest confidence scores.

2. A control device (50) for a vehicle that executes automated driving assistance, the control device comprising:
a multi-core processor (200) including a plurality of cores (400) each having a plurality of processor elements (401); and
a CPU (100) configured to control the multi-core processor,
wherein
the plurality of cores are interconnected,
each of the plurality of processor elements includes an ALU (403) and a MAC calculator (404), and
the multi-core processor executes, on image data indicating an outside of the vehicle inputted to the control device,
at least one of a classification process, a detection process, a segmentation process, or a pose estimation process as a DNN process using a DNN (Deep Neural Network),
at least one of a water droplet-dirt removal process, a distortion correction process, a resizing process, a cropping process, or a luminance standardization process as a pre-process for the DNN process, and
at least one of a NMS process or a Top-K process as a post-process for the DNN process.

3. The control device according to claim 2, wherein
the control device is a processor on a single integrated circuit.

4. The control device according to claim 2, wherein
the multi-core processor is connected to the CPU by loose coupling.

5. The control device according to claim 2, wherein
the multi-core processor executes the DNN process, the pre-process, and the post-process on the image data using at least two cores among the plurality of cores.

6. The control device according to claim 2, wherein
the plurality of processor elements are interconnected so that a processor element executing a calculation among the plurality of processor elements is able to refer to calculation data of other processor elements.

7. The control device according to claim 6, wherein
the plurality of processor elements are interconnected in any aspect of a bus shape, a mesh shape, a ring shape, or a tournament shape.

8. The control device according to claim 6, wherein
the plurality of processor elements form a plurality of groups each including two or more processor elements,
in each of the plurality of groups, the two or more processor elements are all directly interconnected, and
a specific processor element in a first group among the plurality of groups and a specific processor element in a second group among the plurality of groups are interconnected.

9. The control device according to claim 2, wherein
the plurality of cores are interconnected in any aspect of a bus shape, a mesh shape, a ring shape, or a tournament shape.

10. The control device according to claim 2, wherein
the plurality of cores form a plurality of groups including two or more cores,
in each of the plurality of groups, the two or more cores are all directly interconnected, and
a specific core in a first group among the plurality of groups and a specific core in a second group among the plurality of groups are interconnected.

11. A target object recognition device (10) mounted on a vehicle, the target object recognition device comprising:
an imaging unit (20) configured to acquire image data indicating an outside of the vehicle; and
the control device (50) according to any one of claims 2 to 10.

12. The target object recognition device according to claim 11, wherein
the imaging unit is mounted on the vehicle so as to capture an image of a scenery outside the vehicle, and includes an imaging element having full HD to 8K pixels.

13. A vehicle travel control system (140) comprising:
the target object recognition device (10) according to claim 11; and
a traveling device (70),
wherein
the control device executes vehicle travel control for controlling the traveling device based on a result of a target object recognition process by the target object recognition device.
